# EUROPÄISCHE PATENTANMELDUNG

(11) **EP 1 130 836 A2**
(43) Veröffentlichungstag der Anmeldung: **05.09.2001**
(21) Anmeldenummer: 01104824.6
(22) Anmeldetag: 27.02.2001
(51) Int. Cl.: H04L 1/00

(54) **Verfahren zur Regelung der Datenübertragungsqualität und Datenübertragungssystem hierfür**

(30) Priorität: 03.03.2000 DE 10010437
(71) Anmelder: ROBERT BOSCH GMBH, 70442 Stuttgart (DE)
(72) Erfinder: Fischer, Ralf, 31162 Bad Salzdetfurth (DE); Hans, Martin, 31141 Hildesheim (DE); Schulz, Holger, 14059 Berlin (DE)

(57) **Zusammenfassung**

Ein Verfahren zur Regelung der Datenübertragungsqualität zwischen einem Endgerät (1) und einer Datenquelle (2) in einem Datenübertragungssystem hat die Schritte von:
- Einstellen von Parametern in dem Endgerät (1) zur Regelung der Datenübertragung,
- Übertragen der Parameter an die Datenquelle (2),
- Regelung der Datenübertragung in der Datenquelle (2) in Abhängigkeit von den übertragenden Parametern zur Steuerung der Empfangsqualität der Daten.

## Beschreibung

Die Erfindung betrifft ein Verfahren zur Regelung der Datenübertragungsqualität zwischen einem Endgerät und einer Datenquelle in einem Datenübertragungssystem sowie ein Datenübertragungssystem hierzu.

In herkömmlichen Datenübertragungssystemen kann die Datenübertragung durch Variation verschiedener Parameter beeinflusst werden. Werden die zu übertragenden Daten z. B. zur Übertragung von Videodaten quellcodiert, dann können die Algorithmen zur Quellcodierung durch verschiedene Parameter wie z. B. Quantisierer-Stufenhöhe und Suchbereich der Bewegungsschätzung, eingestellt werden. In mobilen Kommunikationssystemen, insbesondere nach dem UMTS- und GPRS-Standard gibt es die Möglichkeit, die Qualität der Übertragung auch während der Datenübertragung zu beeinflussen. Als Parameter dienen hierzu u. a. die Übertragungsverzögerung, die Fehlerrate und die Bitrate.

In kostenpflichtigen Übertragungssystemen beeinflussen die eingestellten Parameter und die damit verbundene Nutzung von Übertragungskanälen die Kosten der Datenübertragung. Je besser die Qualität des Übertragungsdienstes ist, desto teurer ist auch die Datenübertragung. Deshalb ist bei jeder Nutzung eines solchen Systems ein Kompromiss zwischen der gewünschten Qualität und den dafür anfallenden Kosten notwendig.

Bei verschiedenen Quellcodierern können einige Parameter der Codierung auf der Seite der Datenquelle, d. h. des Senders eingestellt werden. Weiterhin ist es bei mobilen Kommunikationssystemen bekannt, die Parameter der Luftschnittstelle in der zentralen Netzsteuerung einzustellen.

Aufgabe der Erfindung war es, ein Verfahren zu Regelung der Datenübertragungsqualität zwischen einem Endgerät und einer Datenquelle anzugeben, durch dass die Datenübertragungsqualität und insbesondere die Kosten der Datenübertragung durch den Nutzer eines Endgerätes beeinflussbar sind.

Die Aufgabe wird durch das Verfahren gemäß Patentanspruch 1 gelöst durch die Schritte:
- Einstellen von Parametern in dem Endgerät zur Regelung der Datenübertragung,
- Übertragen der Parameter an die Datenquelle,
- Regelung der Datenübertragung in der Datenquelle in Abhängigkeit von den übertragenden Parametern zur Steuerung der Empfangsqualität der Daten.

Auf diese Weise ist es einem Nutzer auf der Empfangsseite möglich, mindestens einen Parameter für die Datenübertragung so zu regeln, dass die von dem Nutzer empfundene Empfangsqualität der Datenübertragung beeinflusst wird. Der Nutzer kann somit die Datenübertragungsqualität aufgrund seiner subjektiv empfundenen Qualitätsvorstellungen regeln und die Datenübertragungsqualität optimal steuern. Hierfür werden nicht nur wie herkömmlich Schnittstellenparameter eingestellt. Vielmehr werden Parameter festgelegt, die die Übertragungscharakteristika der zu übertragenden Daten beeinflussen.

Es ist besonders vorteilhaft, wenn mehrere Parameter durch einen einzigen Parameter abgebildet werden. Diese Abbildung kann z. B. kostenabhängig sein, so dass der Nutzer an dem Endgerät lediglich einen Regler zur Festlegung der Datenübertragungskosten benötigt. In Abhängigkeit von den eingestellten Datenübertragungskosten werden dann eine Vielzahl von entsprechenden Parametern eingestellt.

Die Abbildung der Vielzahl von Parametern durch den Reglern kann entweder konstant in dem Endgerät festgelegt sein, durch den Nutzer einstellbar sein oder von einer externen Quelle in das Endgerät eingespeichert werden.

Die Einstellung der Parameter kann gleitend erfolgen. Besonders vorteilhaft ist es jedoch, diskrete Qualitätsklassen für die Datenübertragung zu definieren, wobei pro Qualitätsklasse entsprechende Parameter zur Regelung der Datenübertragung festgelegt sind. Zur Regelung der Datenübertragungsqualität muss der Nutzer dann nur noch eine diskrete Qualitätsklasse in dem Endgerät auswählen.

Zur Regelung der Datenübertragungsqualität können die Parameter der Luftschnittstelle einer Mobilfunkverbindung von dem Nutzer am Endgerät eingestellt werden. Zur Übertragung von quell- oder kanalcodierten Daten können auch Parameter für die Codierung der zu übertragenden Daten festgelegt werden.

Die Erfindung wird nachfolgend anhand der beigefügten Zeichnungen näher erläutert. Es zeigen:
- Figur 1 -: Blockdiagramm eines Datenübertragungssystems;
- Figur 2 -: Abbildungsfunktion von Parametern auf die Stellung eines Reglers.

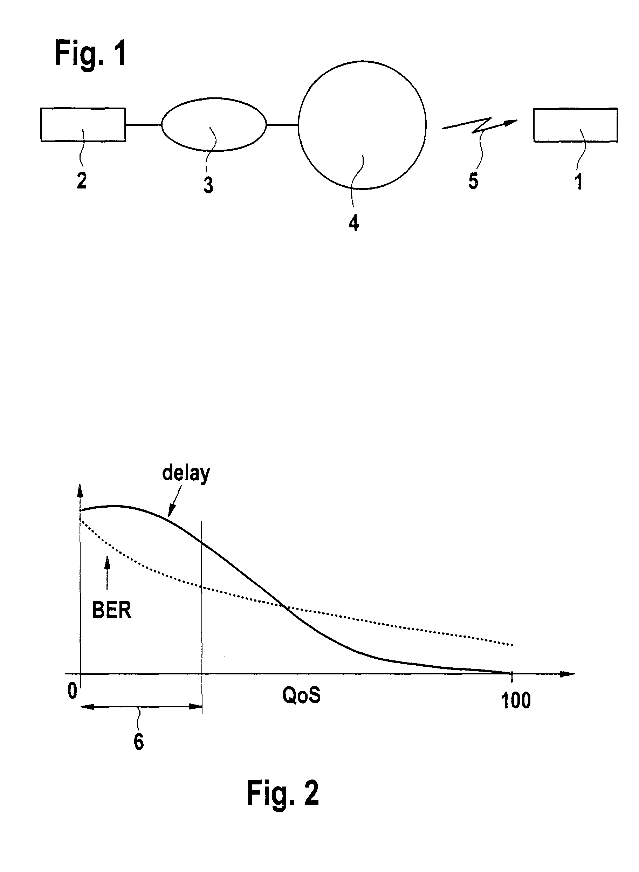

Die Figur 1 lässt ein Blockdiagramm eines Datenübertragungssystems mit einem Endgerät 1 und einer Datenquelle 2 erkennen. Die Daten der Datenquelle 2 werden über ein globales Netzwerk 3, z. B. über das sogenannte Internet, in ein Mobilfunksystem 4 geleitet, das über Basisstationen eine mobile Funkverbindung mit dem Endgerät 1 aufbaut. Das Endgerät kann z. B. ein tragbares Videofon sein, das über einen Mobilfunkkanal 5 mit einer Basisstationen des Mobilfunksystems 4 in Kontakt steht. Nachdem zwischen der Datenquelle 2 und dem Endgerät 1 eine Videoverbindung aufgebaut wurde, kann die Datenübertragungsqualität (QoS) z. B. durch Variation der Parameter "maximale Übertragungsverzögerung" (delay) und Bitfehlerrate (BER) eingestellt werden. Von dem Endgerät kann somit ein Datenübertragungsdienst angefordert werden, bei dem die Parameter durch den Nutzer festgelegt werden.

Die Figur 2 lässt eine Abbildungsfunktion der beiden Parameter maximale Übertragungsverzögerung (delay) und Bitfehlerrate (BER) auf die Stellung 6 eines Reglers erkennen. Hierdurch wird es dem Nutzer des Endgerätes ermöglicht, diese beiden Parameter mit Hilfe eines einzigen Reglers zu variieren. Hierzu bildet die Abbildungsfunktion die Stellung 6 des Reglers, z. B. Werte 0 bis 100, auf die Werte für die Parameter delay und BER ab.

Der Regler kann als Wipptaster ausgebildet sein. Hierbei kann der Wipptaster zur Lautstärkenregelung und Menüsteuerung eines Mobilfunkgerätes zugleich als Qualitätsregler verwendet werden. Gleichermaßen ist es auch denkbar als Regler Taster, Tipp-Taster (jog-dial), Drehregler, menügeführte Auswahlschalter, mehrdimensionale Regler etc. verwendet werden.

Nachdem eine Videoverbindung mit voreingestellten Parametern für die Luftschnittstelle des Mobilfunkkanals 5 aufgebaut wurde, kann der Nutzer auf dem Endgerät 1 bzw. Videofon die empfangene Bildsequenz ansehen und durch einfaches Betätigen des Reglers die Empfangsqualität verbessern oder verschlechtern. Da eine hohe Übertragungsqualität auch mit höheren Kosten verbunden ist, kann der Nutzer auf diese Weise die Kosten optimieren, in dem er z. B. die minimale für den Nutzer akzeptable Datenübertragungsqualität eingestellt wird. Für Detailansichten kann die Datenübertragungsqualität vom Nutzer kurzfristig verbessert werden.

Die einzustellenden Parameter können u. a. zur Regelung der Luftschnittstelle des Mobilfunkkanals 5, zur Einstellung von Codierungsparametern für quell- oder kanalcodierte Daten etc. sein. Wesentlich ist, dass die Parameter zur Steuerung der Empfangsqualität der übertragenden Daten geeignet sind.

## Patentansprüche

1. Verfahren zur Regelung der Datenübertragungsqualität zwischen einem Endgerät (1) und einer Datenquelle (2) in einem Datenübertragungssystem, **gekennzeichnet durch,**
- Einstellen von Parametern an dem Endgerät (1) zur Regelung der Datenübertragung,
- Übertragen der Parameter an die Datenquelle (2),
- Regelung der Datenübertragung in der Datenquelle (2) in Abhängigkeit von den übertragenden Parametern zur Steuerung der Empfangsqualität der Daten.

2. Verfahren nach Anspruch 1, **dadurch gekennzeichnet, dass** mehrere Parameter durch einen Regler in dem Endgerät (1) abgebildet werden.

3. Verfahren nach Anspruch 2, **dadurch gekennzeichnet, dass** die Abbildung von Parametern durch den Regler konstant festgelegt ist.

4. Verfahren nach Anspruch 2, **dadurch gekennzeichnet, dass** die Abbildung von Parametern durch den Regler in dem Endgerät (1) einstellbar ist.

5. Verfahren nach Anspruch 2, **dadurch gekennzeichnet, dass** die Abbildung von Parametern durch den Regler von einer externen Quelle in das Endgerät (1) einspeicherbar ist.

6. Verfahren nach einem der Ansprüche 2 bis 5, **gekennzeichnet durch**
- Definieren von diskreten Qualitätsklassen für die Datenübertragung,
- Festlegen von Parametern pro Qualitätsklasse zur Regelung der Datenübertragung,
- Auswählen einer Qualitätsklasse in dem Endgerät (1) zum Einstellen der Parameter.

7. Verfahren nach einem der vorhergehenden Ansprüche, **dadurch gekennzeichnet, dass** zur Regelung der Datenübertragungsqualität die Parameter der Luftschnittstelle eines Mobilfunkkanals (5) eingestellt werden.

8. Verfahren nach einem der vorhergehenden Ansprüche, **dadurch gekennzeichnet, dass** zur Regelung der Datenübertragungsqualität Parameter für die Codierung der zu übertragenden Daten eingestellt werden.

9. Verfahren nach einem der Ansprüche 2 bis 8, **gekennzeichnet durch** Regelung der Datenübertragung in Abhängigkeit von den Kosten der Datenübertragung durch entsprechende Abbildung der Parameter.

10. Verfahren nach einem der vorhergehenden Ansprüche, **gekennzeichnet durch** Regelung der Datenübertragungsqualität mit Tastern, Wippschaltern, Tipp-Tastern, Drehreglern, menügeführten Auswahlschaltern oder mehrdimensionalen Reglern erfolgt.

11. Datenübertragungssystem mit mindestens einem Endgerät (1) und einer Datenquelle (2), **dadurch gekennzeichnet, dass** das Datenübertragungssystem zur Ausführung des Verfahrens nach einem der vorhergehenden Ansprüche ausgebildet ist.

12. Endgerät (1) zum Datenaustausch mit einer Datenquelle (2), **gekennzeichnet durch** einen Regler in dem Endgerät zur Einstellung von Parametern zur Regelung der Datenübertragung, wobei das Endgerät (1) zur Übertragung der Parameter an die Datenquelle (2) ausgebildet ist, um die Übertragungsqualität der Daten von der Datenquelle (2) zum Empfangsgerät (1) in der Datenquelle (2) zu regeln.
